# EUROPEAN PATENT APPLICATION

(11) **EP 4 485 436 A1**
(43) Date of publication of application: **01.01.2025**
(21) Application number: 24183367.2
(22) Date of filing: 20.06.2024
(51) Int. Cl.: G09F 13/04, G09F 13/18, G09F 21/04

(54) **LOGO LIGHTING DEVICE FOR A VEHICLE, IN PARTICULAR MOTOR VEHICLE**

(30) Priority: 28.06.2023 IT 202300013425
(71) Applicant: Marelli Automotive Lighting Italy S.p.A. Con Socio Unico, 10078 Venaria Reale (TO) (IT)
(72) Inventor: VAIRA, Alessandro, 10078 Venaria Reale (TO) (IT); REGAZZONI, Manuel, 10078 Venaria Reale (TO) (IT); CLERICI, Francesca, 10078 Venaria Reale (TO) (IT)
(74) Representative: Studio Torta S.p.A.

(57) **Abstract**

A logo lighting device (1) for a vehicle, in particular a motor vehicle, including: a light-proof front screen portion (2) provided with at least one integral window (3) that light can pass through and that has boundaries reproducing a logo; a central illuminating device (4) adapted to illuminate the integral window (3); the central illuminating device (4) including a first light guide (5) that extends along a first direction (D1) and is provided with a light source (6) at one end thereof, the first light guide (5) being adapted to output rays that extend along a second direction (D2) which is transversal to the first direction (D1); the central illuminating device (4) including a second light guide (7) having a reduced thickness with respect to its extension and having a side (8) which is arranged facing the first light guide (5) and which is configured to receive at least a part of the output rays at the first guide (4) along the second direction (D2); the second light guide (7) is configured to output light radiation that extends parallel to a third main direction and that is directed towards the integral window (3) .

## Description

### Cross-reference to related patent applications

This patent application claims priority from Italian patent application no. 102023000013425 filed on 28 June 2023, the entire disclosure of which is incorporated herein by reference.

### Technical field

This invention relates to a logo lighting device for a vehicle, in particular a motor vehicle.

### Background of the invention

The patent DE102008044854A1 describes a logo lighting device for a vehicle wherein a casing is made of transparent polycarbonate. A layer of partly transparent metal (for example silver, aluminium, or the like) of some tens of nanometres is applied to the outside at the point where the light must emerge at the logo. The remaining area of the casing is covered in chrome plating so that light does not escape. A lighting device (for example, consisting of SMD LEDs on a printed circuit) is installed in the inner cavity of the casing and protected from the environment via sealing. The device illustrated in the patent mentioned above is formed from many different parts that must be assembled together; thus, its production is complex and costly.

### Subject of the invention

The aim of this invention is to provide a logo display device for a vehicle that is extremely simple to build and to assemble and costs very little.

### Purpose of this invention

The above-mentioned aim is achieved with this invention in that it relates to a logo display device for a vehicle of the type described in claim 1.

### Description of the figures

The invention will be illustrated with reference to the accompanying figures wherein:
Figure 1 illustrates, in a perspective, exploded view, a logo display device for a vehicle produced according to the precepts of this invention;
Figure 2 illustrates, in a front view, the device in Figure 1 installed on a front portion of a vehicle;
Figure 3 illustrates, in a front view, a component part of the device in Figure 1; and
Figure 4 illustrates the operating principle of the part illustrated in Figure 3.

### Preferred description of the invention

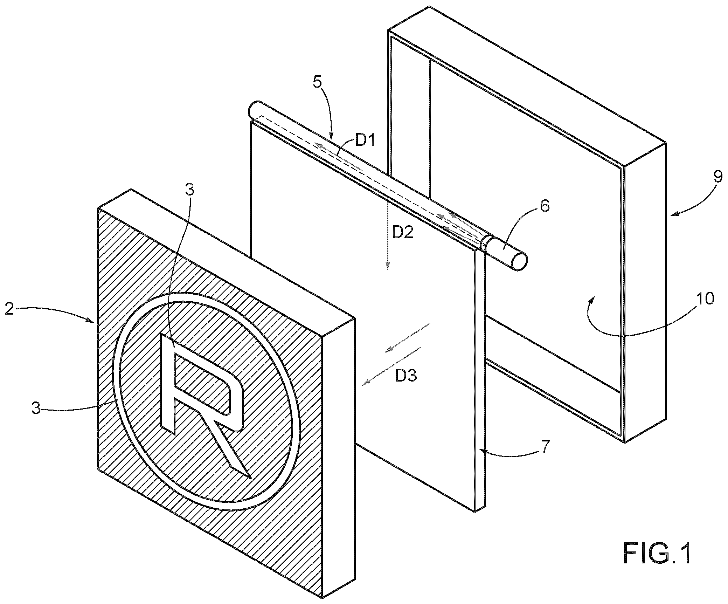

With reference to Figure 1, number 1 identifies a logo lighting device for a vehicle, in particular a motor vehicle, comprising a light-proof front screen portion 2 provided with an integral window 3 that light can pass through and that has edges that reproduce a logo, schematically depicted in the figure with the letter R arranged in a circle. The logo may consist of several different windows that are separated from each other by light-proof parts.

The screen 2 may be printed in a single piece of transparent plastic covered in light-proof paint that is not deposited on the windows 3 that produce the logo. The windows may not be completely transparent and be made of plastic provided with embossing, plastic covered in metallization able to allow light rays to pass through, or opaline material.

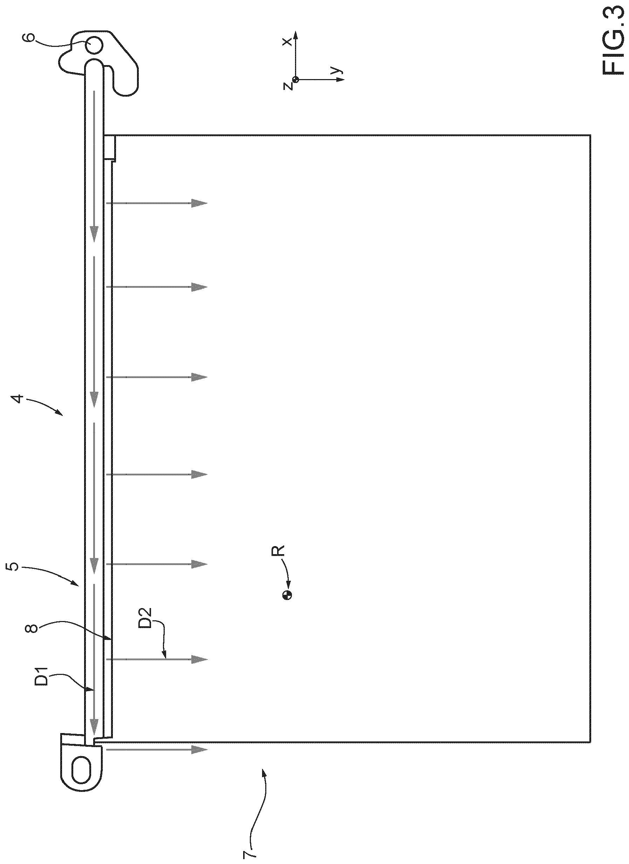

The device 1 also comprises a central illuminating device 4 designed to light the integral window 3 with a spatially uniform light intensity. The central illuminating device 4 comprises a first light guide 5 that, in the embodiment, extends along a first straight direction (D1, see Figure 3) and is provided with a light source 6 at one end thereof (typically an LED) that supplies light at the input of the guide (schematically depicted with arrows in Figure 1). The light guide 5 is designed to output rays that radially extend along a second direction (D2) transverse to the first D1. The light guide 5 could also be different from that illustrated in the drawings, for example curved with more bends or comprising straight portions and curved ones.

The central illuminating device 4 comprises a second light guide 7 having a reduced dimension (the thickness along Z) compared to the dimensions X, Y that define its extension (typically a guide shaped like a flat wall). The guide has, in the example, a straight side 8 (see Figure 3) acting as a collimator which is arranged facing the first straight guide 5 and designed to receive output rays at the first guide 5 that extend along D2.

The second light guide 7 shaped like a flat wall is configured to output light radiation R that extends parallel to a main direction D3 (for example, transverse to the lying plane of the flat wall) and is directed towards the screen 2 and, thus, the integral window 3 in order to light it completely. Basically, the flat wall 7 lights up with a spatially uniform light intensity along its whole extension along X and Y.

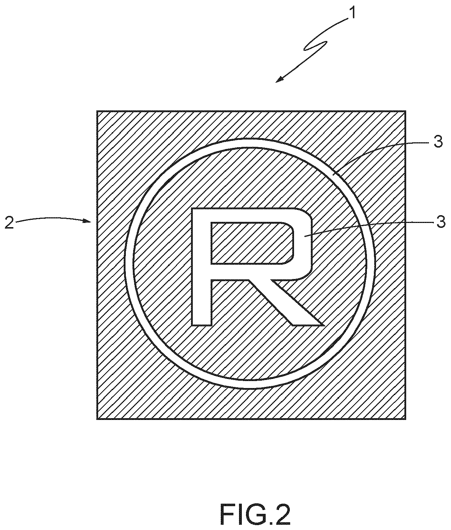

In use, the device 1 is installed in the vehicle so that the light radiation output at the window 3 along D3 is also parallel to the axis of the vehicle in which the logo lighting device is installed (see Figure 2). In this way, the window 3 of the device 1 is seen completely lit up by an observer that is located in front of the vehicle.

A rear cover 9 configured to house the central illuminating device 4 can be connected to the front portion of the screen 2 using known fasteners, for example screws (not illustrated).

The cover 9 is not an essential element of the device and may also not be included.

Conveniently, the first light guide 5 and the second light guide 7 shaped like a flat wall are made via moulding of a single piece of plastic. In this way, production costs are reduced and assembly is simplified.

Conveniently, the rear cover 9 - if included - is delimited by a flat reflecting wall 10 facing the central illuminating device 4. This wall 10 can be covered by a reflecting surface, for example a metal surface, or, more simply, the cover 9 may be made of light-coloured, for example white, plastic.

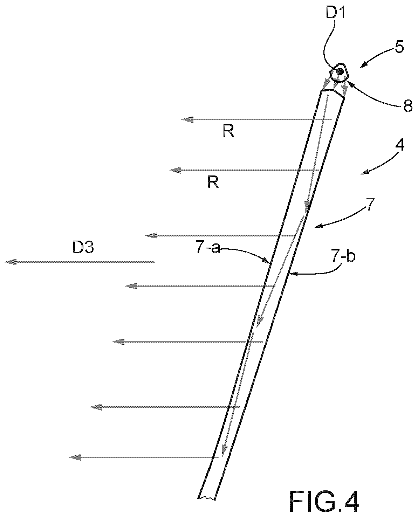

As can be seen in Figure 4, the flat wall that creates the central illuminating device 4 is delimited by two opposite faces 7-a, 7-b at least one of which (7-b in the example) is provided with light outcoupling elements that allow the generation of light radiation developing parallel to one another.

Conveniently, the light out-coupling elements comprise prisms, embossing, paint, or metallization.

## Claims

1. A logo lighting device (1) for a vehicle, in particular a motor vehicle, **characterized by** comprising:
- a light-proof front screen portion (2) provided with at least one integral window (3) that light can pass through and that has boundaries reproducing a logo;
- a central illuminating device (4) adapted to illuminate the integral window (3); the central illuminating device (4) comprises a first light guide (5) which extends, at least for a stretch thereof, along a first direction (D1) and is provided with a light source (6) at one end thereof, said first light guide (5) being adapted to output rays which extend along a second direction (D2) which is transversal to the first direction (D1); the central illuminating device (4) comprising a second light guide having a dimension (Z) which is reduced with respect to the dimensions X, Y defining its extension and having at least one side (8) arranged facing the first light guide (5) and configured to receive at least a part of the output rays at the first guide (4) along the second direction (D2); said second light guide (7) being configured to output light radiations which extend parallel to a third main direction (D3) and are directed towards the integral window (3).

2. **-** The device according to claim 1, wherein the first light guide (5) and the second light guide (7) are made in a single piece of plastic material.

3. **-** The device according to claim 1 or 2, wherein a rear cover (9) is provided, which is delimited by a flat reflecting wall (10) facing the central illuminating device.

4. **-** The device according to any one of the preceding claims, wherein the second light guide (7) is delimited by two opposite faces (7-a, 7-b) at least one of which (7-b) is provided with light outcoupling elements that allow the generation of light radiations developing parallel to one another.

5. **-** The device according to claim 4, wherein the light out-coupling elements comprise prisms, embossing, paint, metallization.

6. **-** The device according to any one of the preceding claims, wherein said first light guide (5) is of the rectilinear type.

7. **-** The device according to any one of the preceding claims, wherein said second light guide (5) is shaped like a flat wall.

8. - The device according to claim 7, wherein the light guide (7) is shaped like a flat wall and is configured to output light radiation R which extends transversely to the lying plane of the flat wall.
